# EUROPEAN PATENT SPECIFICATION

(11) **EP 1 942 055 B1**
(45) Date of publication and mention of the grant of the patent: **23.04.2014**
(21) Application number: 06775325.1
(22) Date of filing: 08.08.2006
(51) Int. Cl.: B64F 1/305

(54) **PASSENGER BOARDING BRIDGE WITH A RUNNING MECHANISM AND CONTROL METHOD**
PASSAGIERBRÜCKE MIT ROLLMECHANISMUS SOWIE STEUERVERFAHREN
PASSERELLE D'EMBARQUEMENT DE PASSAGERS AVEC MECANISME DE ROULEMENT ET PROCEDE DE COMMANDE

(30) Priority: 27.10.2005 CN 200510100860
(43) Date of publication of application: 09.07.2008
(73) Proprietor: China International Marine Containers (Group) Co., Ltd., Shenzhen Guang Dong 518067 (CN)
(72) Inventor: XIANG, Wei, Guang Dong 518067 (CN)
(74) Representative: Mackett, Margaret Dawn
(86) International application number: PCT/CN2006/002007
(87) International publication number: WO 2007/048302

(56) References cited:
- CN-A- 1 313 227
- CN-Y- 2 232 894
- CN-Y- 2 452 888
- US-A- 3 462 784
- US-A- 4 318 198
- US-A- 5 151 004
- US-A- 5 855 035
- US-B1- 6 481 039
- US-B2- 6 862 768

## Description

### Field of the Invention

The invention relates to a passenger boarding bridge and the control method thereof, more specifically, it relates to a passenger boarding bridge comprising a running mechanism and the control method thereof.

US 5855035 A, which is considered the closest known state of the art, discloses a passenger boarding bridge with a running mechanism and a control method for reducing wheel skidding during a turning movement of the passenger boarding bridge.

### Background of the Invention

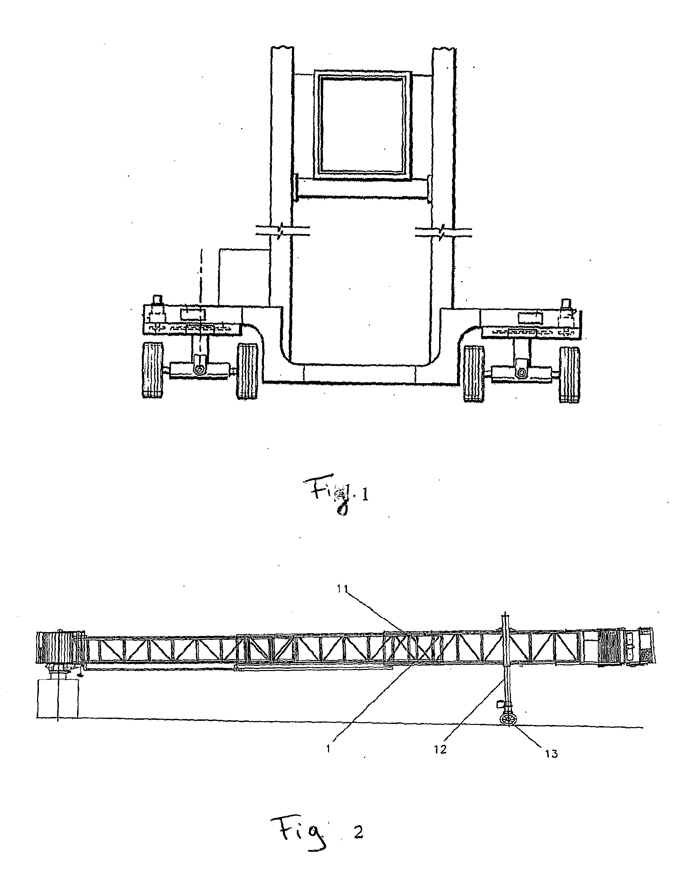

At present, most passenger boarding bridges of airports adopt a two-wheel running mechanism with single-point support. Such boarding bridges can serve a doors of common aircrafts. If they are used to serve an upper doors of double-decked aircrafts, the sloshing is considerable during traveling due to the upper doors are too high, which makes them difficult to meet the requirement of relevant standards. In order to solve this problem, a boarding bridge with a four-wheel running mechanism is provided, as shown in Fig. 1. The bridge has two running wheel sets disposed on two sides of a beam of the running mechanism, and each set has two running wheels. The rotating direction and running of each running wheel set is respectively driven by two motors. The running mechanism has the following defects:
1. the structure is complex and mechanical trouble is particularly prone to occur;
2. the control method is complex and control trouble is particularly prone to occur;
3. during the process of running and rotation, due to unmatched speeds of the running wheels, sliding friction exists between the running wheels and the ground surface, and the surfaces of running wheels are severely worn.

### Summary of the Invention

An object of the present invention is to solve the problems existing in said two-wheel running mechanism of the boarding bridge in prior art such as complex structure, and provide running mechanism for a passenger boarding bridge.

A further object of the present invention is to solve the problems existing in said two-wheel running mechanism of the boarding bridge in prior art such as complex control method and the severe worn of the surfaces of running wheels incurred from the sliding friction between the running wheels and the ground surface, and provide running mechanism for a passenger boarding bridge.

To solve the technical problem mentioned above, the present invention provides a passenger boarding bridge comprising a control system for the operation thereof, and a running mechanism, the running mechanism comprising: a beam; two rotary supporting members respectively connected to the bottom of the two ends of the beam; two running wheel sets respectively pivotally connected to the lower ends of the rotary supporting members, each running wheel set comprising a wheel carrier and two running wheels respectively connected with two ends of the wheel carrier, the pivotally connecting point being on the wheel carrier; and four driving means respectively providing wheel-side driving for the four running wheels, the driving means comprising a reducer and a prime mover connected with the reducer, the prime mover being a motor or a hydraulic motor; characterized in that the running mechanism further comprises an angle transducer on the rotary supporting members adjacent to the beam of one running wheel, the angle transducer sensing a wheel carrier angle of said one running wheel; and in that the control system comprises a programmable logic controller for controlling the turning of the boarding bridge through speed calculation of the other three running wheels based on the sensed wheel carrier angle and the instantaneous speed of said one running wheel, the angle transducer communicating with the control system of the boarding bridge.

In the running mechanism in the present invention, the reducer is a wheel-side reducer, and the wheel carrier has a hollow structure in which the prime mover is arranged.

To solve the technical problem mentioned above, the present invention further provides a control method of running mechanism for a passenger boarding bridge in which the running mechanism comprises: a beam; two rotary supporting members respectively connected to the bottom of the two ends of the beam; two running wheel sets respectively pivotally connected to the lower ends of the rotary supporting members, each running wheel set comprising a wheel carrier and two running wheels respectively connected with two ends of the wheel carrier, the pivotally connecting point being on the wheel carrier; four driving means respectively providing wheel-side driving for the four running wheels, the driving means comprising a reducer and a prime mover connected to the reducer, the prime mover being a motor or a hydraulic motor; and an angle transducer on the rotary supporting members adjacent to the beam of one running wheel; a control system of the boarding bridge comprising a programmable logic controller, the angle transducer communicating with the programmable logic controller; the control method comprises:
a. operators deliver a command to the programmable logic controller to control the gradual turning of the running mechanism for passenger boarding bridge and to control the speed of said one running wheel;
b. the programmable logic controller calculates the instantaneous speed of the other three running wheels according to the wheel carrier angle of the two running wheel sets sensed by the angle transducer and the speed of said one running wheel, the instantaneous speeds of the other three running wheels match with the speed of said one running wheel, which reduces the relative sliding between the four running wheels and the ground surface; c. the programmable logic controller delivers command to control the driving means of the other three running wheels and to keep the instantaneous speed of the three running wheels.

In the control method of the running mechanism for passenger boarding bridge in the present invention, said one running wheel comprises any of the four running wheels, and the instantaneous speed of the three other running wheels dynamically match with the speed of said one running wheel by control of the programmable logic controller.

In the control method of the running mechanism for passenger boarding bridge in the present invention, operators deliver command to the programmable logic controller by operating a handle.

The beneficial effects of the running mechanism for a passenger boarding bridge and the control method thereof according to the invention are:
1. the structure is simple and the possibility of trouble for the running mechanism of boarding bridge is lowered;
2. by controlling the speed matching of the four running wheels and by comparison with the prior art, the control method significantlly diminishes the sliding between the running wheels and the ground surface, lowers the surface abrasion of the running wheels and improves the life time of the running wheels;
3. the control method is simple. It lowers the possibility of trouble for the running mechanism for boarding bridge as well as the maintenance cost of the boarding bridge.

### Brief Description of the Drawings

The present invention will be further described with reference to the accompanying drawings and embodiments hereinafter, in the accompanying drawings:
Fig. 1 is a schematic view of the running mechanism for boarding bridge in prior art;
Fig. 2 is a schematic view of a boarding bridge;
Fig. 3 is a schematic view of the running mechanism and elevator for the boarding bridge of the invention;
Fig. 4 is a drawing of partial enlargement in an embodiment of the running mechanism of boarding bridge of the invention;
Fig. 5 is a flow diagram of the control method of the running mechanism for boarding bridge of the invention.

### Detailed Description of the Preferred Embodiment

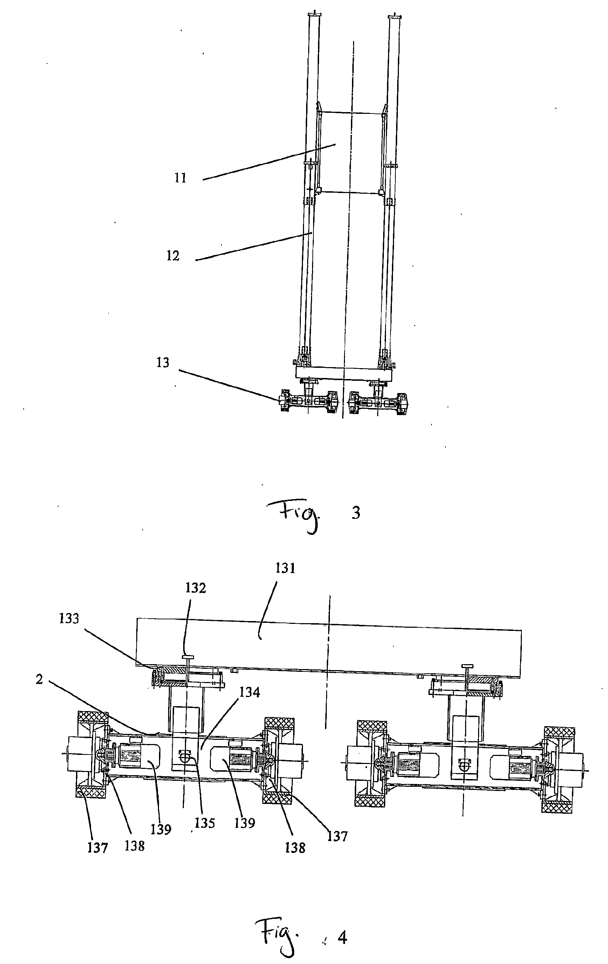

As shown in Fig. 2 and 3, a tunnel 11 of a boarding bridge 1 is supported on a running mechanism 13 via an elevator 12.

The running mechanism of boarding bridge according to an embodiment of the invention is shown in Fig. 4. The running mechanism 13 comprises a beam 131, rotary supporting members 133 and running wheel sets 2. Two rotary supporting member sets 133 are respectively connected under the two sides of the beam 131. An angle transducer 132 is provided on the point where the rotary supporting members 133 adjacent to the beam 131, and communicates with a control device of the boarding bridge to sense the rotating angle of the rotary supporting members 133 relative to the beam 131.The lower ends of the rotary supporting members 133 are pivotally connected to wheel carriers 134 of the running wheel sets 2 by axis pins 135.

Each running wheel set 2 comprises the wheel carrier 134, and two running wheels 137 respectively connected to the two ends of the wheel carrier 134. A motor 139 is set for each running wheel 137, and the motor 139 drives the corresponding running wheel 137 by a wheel-side reducer 138. Each wheel carrier 134 has a hollow structure. The motor 139 is arranged in the hollow structure of the wheel carrier 134. The motor 139 can be substituted by a hydraulic motor.

In another embodiment, each running wheels 137 is directly wheel-side driven by a speed-reducing motor or a speed-reducing hydraulic motor with deceleration device. The speed-reducing motor or speed-reducing hydraulic motor is arranged in or outside of the hollow structure of the wheel carrier 134, and transfers the rotation to the central axis of the running wheel 137 by a gearing device.

In another embodiment, each running wheel 137 is driven by a reducer arranged in the hollow structure of the wheel carrier 134 and by a motor or hydraulic motor arranged outside the hollow structure of the wheel carrier 134, or the reducer and the motor or hydraulic motor driving the running wheel 137 are arranged outside the wheel carrier 134.

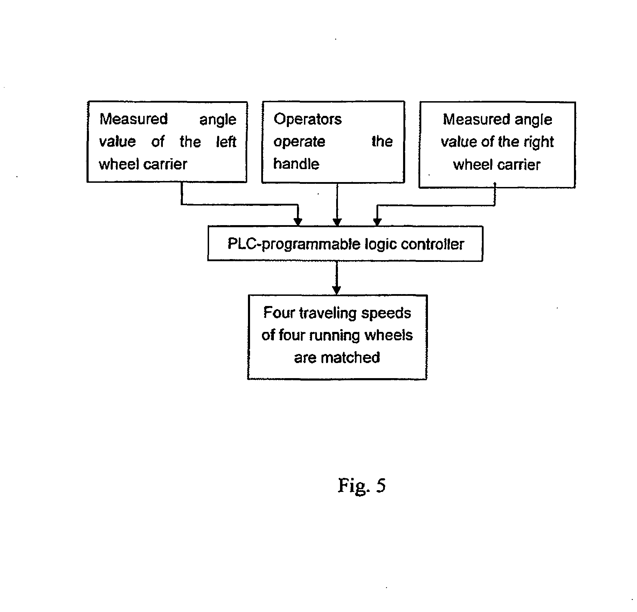

The running mechanism 13 realizes the traveling and turning of the boarding bridge. As shown in Fig. 5, its control method is as follows: First, operators deliver a command to a PLC (programmable logic controller) by operating a handle to control the gradual turning of the running mechanism for boarding bridge 13 and to control the speed of one running wheel. This running wheel can be chosen from the four running wheels.

The PLC calculates the instantaneous speeds of the other three running wheels according to the wheel carrier angle (angle between the wheel carrier 134 and the tunnel of boarding bridge 11) of the two running wheel sets sensed by the angle transducer 132 and the speed of the one running wheel. The instantaneous speeds of the other three running wheels match with the speed of the one running wheel, which reduces the relative sliding between the four running wheels and the ground surface.

The PLC delivers command to and controls the driving means of the other three running wheels to keep the instantaneous speeds of the other three running wheels is matched with the speed of the one running wheel.

The PLC controls the dynamic matching between the instantaneous speed of the three other running wheels and the speed of the one wheel. It is suited to speed change. By comparison with the prior art, the relative sliding between the four running wheels and the ground surface is decreased.

Besides delivering command to the PLC by operating the handle, operators can adopt different operating devices according to the boarding bridge and deliver command to the PLC through the corresponding operating devices, such as delivering command to the PLC via such operating device as operating button.

## Claims

1. A passenger boarding bridge (1) comprising a control system for the operation thereof, and a running mechanism (13), the running mechanism comprising:
a beam (131);
two rotary supporting members (133) respectively connected to the bottom of the two ends of the beam (131);
two running wheel sets (2) respectively pivotally connected to the lower ends of the rotary supporting members (133), each running wheel set comprising a wheel carrier (134) and two running wheels (137) respectively connected with two ends of the wheel carrier (134), the pivotally connecting point being on the wheel carrier (134); and
four driving means (139) respectively providing wheel-side driving for the four running wheels (137), the driving means comprising a reducer and a prime mover connected with the reducer, the prime mover being a motor or a hydraulic motor;
**characterized in that**: the running mechanism further comprises an angle transducer (132) on the rotary supporting members (133) adjacent to the beam (131) of one running wheel, the angle transducer (132) sensing a wheel carrier angle of said one running wheel;
and **in that** the control system comprises a programmable logic controller for controlling the turning of the boarding bridge through speed calculation of the other three running wheels (137) based on the sensed wheel carrier angle and the instantaneous speed of said one running wheel (137), the angle transducer communicating with the control system.

2. A passenger boarding bridge as set forth in claim 1, **characterized in that**: the reducer is a wheel-side reducer, and the wheel carrier (134) has a hollow structure in which, the prime mover is arranged.

3. A control method for a passenger boarding bridge (1) comprising a control system for the operation thereof and a running mechanism comprising: a beam (131); two rotary supporting members (133) respectively connected to the bottom of the two ends of the beam (131): two running wheel sets (2) respectively pivotally connected to the lower ends of the rotary supporting members (133), each running wheel set comprising a wheel carrier (134) and two running wheels (137) respectively connected with two ends of the wheel carrier (134), the pivotally connecting point being on the wheel carrier; four driving means (139) respectively providing wheel-side driving for the four running wheels (137), the driving means comprising a reducer and a prime mover connected to the reducer, the prime mover being a motor or a hydraulic motor; and an angle transducer on the rotary supporting members (133) adjacent to the beam (131) of one running wheel; the control system comprising a programmable logic controller, the angle transducer communicating with the programmable logic controller; the control method comprises:
a. operators deliver a command to the programmable logic controller to control the gradual turning of the running mechanism (13) for passenger boarding bridge (1) and to control the speed of said one running wheel (137);
b. the programmable logic controller calculates the instantaneous speed of the other three running wheels (137) according to the wheel carrier angle of the two running wheel sets (2) sensed by the angle transducer and the speed of said one running wheel, the instantaneous speeds of the other three running wheels match with the speed of said one running wheel, which reduces the relative sliding between the four running wheels (137) and the ground surface;
c. the programmable logic controller delivers command to control the driving means of the other three running wheels and to keep the instantaneous speed of the three running wheels.

4. The control method of the passenger boarding bridge as set forth in claim 3, **characterized in that**: said one running wheel comprises any of the four running wheels (137), and the instantaneous speed of the three other running wheels dynamically match with the speed of said one running wheel by control of the programmable logic controller.

5. The control method of the passenger boarding bridge as set forth in claim 3, **characterized in that**: operators deliver command to the programmable logic controller by operating a handle.

## Patentansprüche

1. Fluggastbrücke (1), aufweisend ein Steuersystem für deren Betrieb und einen Laufmechanismus (13) wobei der Laufmechanismus Folgendes aufweist:
einen Träger (131);
zwei Drehstützelemente (133), die jeweils mit dem Boden der zwei Enden des Trägers (131) verbunden sind;
zwei Laufradsätze (2), die jeweils schwenkbar mit den unteren Enden der Drehstützelemente (133) verbunden sind, wobei jeder Laufradsatz einen Radträger (134) und zwei, jeweils mit zwei Enden des Radträgers (134) verbundene Laufräder (137) aufweist, wobei sich der Schwenkverbindungspunkt auf dem Radträger (134) befindet; und
vier Antriebsmittel (139), die jeweils einen radseitigen Antrieb der vier Laufräder (137) bereitstellen, wobei die Antriebsmittel ein Untersetzungsgetriebe und einen mit dem Untersetzungsgetriebe verbundenen Antriebsmotor aufweisen, wobei der Antriebsmotor ein Elektromotor oder Hydromotor ist;
**dadurch gekennzeichnet, dass** der Laufmechanismus ferner einen Winkelsensor (132) auf den Drehstützelementen (133) neben dem Träger (131) eines Laufrads aufweist, wobei der Winkelsensor (132) den Radträgerwinkel des einen Laufrads erkennt;
und dadurch, dass das Steuersystem eine programmierbare Steuerlogik zur Steuerung der Fluggastbrücke durch Berechnung der Geschwindigkeit der anderen drei Laufräder (137) auf Basis des erkannten Radträgerwinkels und der Momentangeschwindigkeit des einen Laufrads (137) aufweist, wobei der Winkelsensor mit dem Steuersystem kommuniziert.

2. Fluggastbrücke nach Anspruch 1, **dadurch gekennzeichnet, dass** das Untersetzungsgetriebe ein radseitiges Untersetzungsgetriebe ist und der Radträger (134) Hohlkonstruktion ist, in der der Antriebsmotor angeordnet ist.

3. Steuerverfahren für eine Fluggastbrücke (1), aufweisend ein Steuersystem für deren Betrieb und einen Laufmechanismus aufweisend: einen Träger (131); zwei Drehstützelemente (133), die jeweils mit dem Boden der beiden Enden des Trägers (131) verbunden sind: zwei Laufradsätze (2), die jeweils schwenkbar mit den unteren Enden der Drehstützelemente (133) verbunden sind, wobei jeder Laufradsatz einen Radträger (134) und zwei Laufräder (137) aufweist, die jeweils mit den zwei Enden des Radträgers (134) verbunden sind, wobei sich der Schwenkverbindungspunkt auf dem Radträger befindet; vier Antriebsmittel (139), die jeweils einen radseitigen Antrieb der vier Laufräder (137) bereitstellen, wobei die Antriebsmittel ein Untersetzungsgetriebe und einen mit dem Untersetzungsgetriebe verbundenen Antriebsmotor aufweisen, wobei der Antriebsmotor ein Elektromotor oder Hydromotor ist; und einen Winkelsensor auf den Drehstützelementen (133) neben dem Träger (131) eines Laufrads; wobei das Steuersystem eine programmierbare Steuerlogik aufweist, der Winkelsensor mit der programmierbaren Steuerlogik kommuniziert, wobei das Steuerverfahren Folgendes aufweist:
a. Bediener geben einen Befehl an die programmierbare Steuerlogik zur Steuerung des schrittweisen Drehens der Laufmechanismus (13) der Fluggastbrücke (1) und zur Steuerung der Geschwindigkeit des einen Laufrades (137);
b. die programmierbare Steuerlogik berechnet die Momentangeschwindigkeit der anderen drei Laufräder (137) gemäß dem vom Winkelsensor erkannten Radträgerwinkel der zwei Laufradsätze (2) und die Geschwindigkeit des einen Laufrads, die Momentangeschwindigkeit der anderen drei Laufräder stimmt mit der Geschwindigkeit des einen Laufrads überein, was die relative Verschiebung zwischen den vier Laufrädern (137) und der Bodenfläche reduziert;
c. die programmierbare Steuerlogik gibt einen Befehl zur Steuerung der Antriebsmittel der anderen drei Laufräder aus und zur Beibehaltung der Momentangeschwindigkeit der drei Laufräder.

4. Steuerverfahren der Fluggastbrücke nach Anspruch 3, **dadurch gekennzeichnet, dass**: das eine Laufrad eines der vier Laufräder (137) umfasst, und die Momentangeschwindigkeit der drei andere Laufräder dynamisch der Geschwindigkeit des einen Laufrads durch die Steuerung durch die programmierbare Steuerlogik angepasst wird.

5. Steuerverfahren der Fluggastbrücke nach Anspruch 3, **dadurch gekennzeichnet, dass** Bediener den Befehl an die programmierbare Steuerlogik durch Betätigen eines Handgriffes ausgeben.

## Revendications

1. Passerelle d'embarquement de passagers (1) comprenant un système de commande pour sa manoeuvre et un mécanisme de roulement (13), le mécanisme de roulement comprenant :
une traverse (131) ;
deux organes de support rotatifs (133) reliés respectivement au dessous des deux extrémités de la traverse (131) ;
deux jeux (2) de roues de roulement reliés respectivement à pivotement aux extrémités inférieures des organes de support rotatifs (133), chaque jeu de roues de roulement comprenant un porte-roues (134) et deux roues de roulement (137) reliées respectivement aux deux extrémités du porte-roues (134), le point de liaison à pivotement se trouvant sur le porte-roues (134) : et
quatre moyens d'entraînement (139) fournissant respectivement un entraînement côté roue pour les quatre roues de roulement (137), les moyens d'entraînement comprenant un réducteur et un moteur principal connecté au réducteur, le moteur principal étant un moteur ou un moteur hydraulique ;
**caractérisé**
**en ce que** le mécanisme de roulement comprend en outre un transducteur angulaire (132) sur les organes de support rotatifs (133) adjacents à la traverse (131) d'une roue de roulement, le transducteur angulaire (132) détectant un angle de porte-roues de ladite une roue de roulement ; et
**en ce que** le système de commande comprend un contrôleur à logique programmable pour piloter la rotation de la passerelle d'embarquement en calculant la vitesse des trois autres roues de roulement (137) sur la base de l'angle de porte-roues détecté et de la vitesse instantanée de ladite une roue de roulement (137), le transducteur angulaire communiquant avec le système de commande.

2. Passerelle d'embarquement de passagers comme exposé dans la revendication 1, **caractérisée en ce que** le réducteur est un réducteur du côté roue, et le porte-roues (134) a une structure creuse dans laquelle le moteur principal est disposé.

3. Procédé de commande pour une passerelle d'embarquement de passagers (1) comprenant un système de commande pour sa manoeuvre et un mécanisme de roulement comprenant : une traverse (131) ; deux organes de support rotatifs (133) reliés respectivement au dessous des deux extrémités de la traverse (131) ; deux jeux (2) de roues de roulement reliés respectivement à pivotement aux extrémités inférieures des organes de support rotatifs (133), chaque jeu de roues de roulement comprenant un porte-roues (134) et deux roues de roulement (137) reliées respectivement aux deux extrémités du porte-roues (134), le point de liaison à pivotement se trouvant sur le porte-roues ; quatre moyens d'entraînement (139) fournissant respectivement un entraînement côté roue pour les quatre roues de roulement (137), les moyens d'entraînement comprenant un réducteur et un moteur principal connecté au réducteur, le moteur principal étant un moteur ou un moteur hydraulique ; et un transducteur angulaire sur les organes de support rotatifs (133) adjacents à la traverse (131) d'une roue de roulement ; le système de commande comprenant un contrôleur à logique programmable, le transducteur angulaire communiquant avec le système de commande ; le procédé de commande comprend :
a. des opérateurs délivrent une commande au contrôleur à logique programmable pour piloter la rotation graduelle du mécanisme de roulement (13) pour la passerelle d'embarquement de passages (1) et pour piloter la vitesse de ladite une roue de roulement (137) ;
b. le contrôleur à logique programmable calcule la vitesse instantanée des trois autres roues de roulement (137) en fonction de l'angle de porte-roues des deux jeux (2) de roues de roulement détecté par le transducteur angulaire et de la vitesse de ladite une roue de roulement, les vitesses instantanées des trois autres roues de roulement s'adaptent à la vitesse de ladite une roue de roulement, ce qui réduit la glissement relatif entre les quatre roues de roulement (137) et la surface du sol ;
c. le contrôleur à logique programmable délivre une commande pour piloter les moyens d'entraînement des trois autres roues de roulement et pour maintenir la vitesse instantanée des trois roues de roulement.

4. Procédé de commande de la passerelle d'embarquement de passagers comme exposé dans la revendication 3, **caractérisé en ce que** : ladite une roue de roulement comprend l'une quelconque des quatre roues de roulement (137), et la vitesse instantanée des trois autres roues de roulement est adaptée dynamiquement à la vitesse de ladite une roue de roulement par pilotage du contrôleur à logique programmable.

5. Procédé de commande de la passerelle d'embarquement de passagers comme exposé dans la revendication 3, **caractérisé en ce que** : des opérateurs délivrent une commande au contrôleur à logique programmable en manoeuvrant une manette.
